# EUROPEAN PATENT APPLICATION

(11) **EP 4 053 087 A1**
(43) Date of publication of application: **07.09.2022**
(21) Application number: 20880548.1
(22) Date of filing: 21.10.2020
(51) Int. Cl.: C03C 3/068, C03C 3/064, G02B 1/00, G02B 27/02

(54) **OPTICAL GLASS PLATE**

(30) Priority: 31.10.2019 JP 2019198495; 12.12.2019 JP 2019224531
(71) Applicant: Nippon Electric Glass Co., Ltd., Otsu-shi, Shiga 520-8639 (JP)
(72) Inventor: SAWASATO, Hiroshi, Otsu-shi Shiga 520-8639 (JP); KONOSHITA, Satoko, Otsu-shi Shiga 520-8639 (JP)
(74) Representative: Tetzner, Michael
(86) International application number: PCT/JP2020/039589
(87) International publication number: WO 2021/085271

(57) **Abstract**

Provided is an optical glass plate having a high refractive index and excellent visible light transmittance. An optical glass plate characterized by containing as a glass composition at least one selected from Nb₂O₅, La₂O₃, and Gd₂O₃, the optical glass plate having a refractive index (nd) of 1.90 to 2.30 and an internal transmittance τ₄₅₀ of 75% or greater for a thickness of 10 mm at a wavelength of 450 nm.

## Description

### Technical Field

The present invention relates to an optical glass plate to be used, for example, as a light guide plate of a wearable image display device.

A glass material is used as a constituting member of a wearable image display device, such as eyeglasses with a projector, an eyeglasses-type or goggle-type display, a virtual reality (VR) or augmented reality (AR) display device, and a virtual image display device. The glass plate functions as, for example, a see-through light guide plate and enables a user to see an image displayed on the glass plate while allowing the user to view the outside scenery through the glass plate. In addition, the glass plate can further facilitate producing a 3D image using technology to project different images on the left and right of eyeglasses. Also, the glass plate can facilitate creating a virtual reality space using technology to converge an image on the retina using the crystalline lens of the eye. Such a glass plate is required to have a high refractive index for establishing wide-angle images, achieving high brightness and high contrast, and improving light guide properties, etc.

### Citation List

### Patent Literature

Patent Document 1: JP 2017-032673 A

### Summary of Invention

### Technical Problem

In the glass plate used in the wearable image display device described above, an element having absorption in the visible range is often used as a component to increase the refractive index. Thus, a high refractive index glass generally has an issue of low light transmittance in the visible range. However, a device for such applications as described above with a low transmittance would reduce the brightness of an image viewed by the user. Thus, the optical glasses for those applications are required to have both a high refractive index and a high visible light transmittance.

In view of such a situation, an object of the present invention is to provide an optical glass plate having a high refractive index and excellent visible light transmittance.

### Solution to Problem

As a result of diligent studies, the present inventors have found that the above issues are solved by having a predetermined component as a glass composition and controlling internal transmittances at a specific wavelength.

That is, an optical glass plate according to an embodiment of the present invention is characterized by containing as a glass composition at least one selected from Nb₂O₅, La₂O₃, and Gd₂O₃, the optical glass plate having a refractive index (nd) from 1.90 to 2.30 and an internal transmittance τ₄₅₀ of 75% or greater for a thickness of 10 mm at a wavelength of 450 nm. The "internal transmittance" is a transmittance excluding surface reflection losses on the incoming and outgoing sides of the glass plate and can be calculated using measured values of transmittances at each of the thicknesses of 3 mm and 10 mm, the measured values including surface reflection losses.

In the optical glass plate according to an embodiment of the present invention, an internal transmittance τ₅₂₀ is preferably 85% or greater for a thickness of 10 mm at a wavelength of 520 nm.

The optical glass plate according to an embodiment of the present invention preferably contains TiO₂ as a glass composition, and a ratio of peak heights of Ti²⁺ and Ti⁴⁺, that is Ti²⁺/Ti⁴⁺, is preferably 0.3 or less in a spectrum obtained by X-ray photoelectron spectroscopy (XPS) on a glass cut surface. In general, Ti in glass is present as Ti²⁺ or Ti⁴⁺. Here, Ti⁴⁺ does not cause a decrease in visible light transmittance properties, but Ti²⁺ serves as a color center and thus reduces visible light transmittance properties. Thus, the ratio of peak heights of Ti²⁺ and Ti⁴⁺ is specified as described above in a spectrum obtained by XPS, and this enables the glass to have excellent visible light transmittance.

The optical glass plate according to an embodiment of the present invention preferably contains Nb₂O₅ as a glass composition, and a ratio of peak heights of Nb²⁺ and Nb⁵⁺, that is Nb²⁺/Nb⁵⁺, is preferably 0.25 or less in a spectrum obtained by X-ray photoelectron spectroscopy on a glass cut surface. In general, Nb in glass is present as Nb²⁺ or Nb⁵⁺. Here, Nb⁵⁺ does not cause a decrease in visible light transmittance properties, but Nb²⁺ serves as a color center and thus reduces visible light transmittance properties. Thus, the ratio of peak heights of Nb²⁺ and Nb⁵⁺ is specified as described above in a spectrum obtained by XPS, and this enables the glass to have excellent visible light transmittance.

The optical glass plate according to an embodiment of the present invention preferably contains, as glass compositions, from 1 to 20% of SiO₂, from 1 to 25% of B₂O₃, from 1 to 30% of TiO₂, and from 1 to 30% of Nb₂O₅ in terms of an oxide in mass%.

The optical glass plate according to an embodiment of the present invention preferably further contains from 10 to 60% of La₂O₃, from 0 to 20% of Gd₂O₃, from 0 to 15% of ZrO₂, and from 0 to 5% of Y₂O₃ in terms of an oxide in mass%.

The optical glass plate according to an embodiment of the present invention preferably further contains from 0 to 5% of CaO and from 0 to 5% of SrO in terms of an oxide in mass%.

The optical glass plate according to an embodiment of the present invention preferably has a content ratio of B³⁺ and Si⁴⁺, that is B³⁺/Si⁴⁺, in a glass composition from 0.5 to 5.

The optical glass plate according to an embodiment of the present invention preferably contains as a glass composition substantially no arsenic component, no fluorine component, and no lead component. In an embodiment of the present invention, "contains substantially no X component" means that the X component is intentionally not included in the glass and does not completely exclude a case where an unavoidable impurity is present. This objectively means that the content of each component including an impurity is less than 0.1% in mass%.

The optical glass plate according to an embodiment of the present invention preferably has an Abbe number (vd) from 20 to 35.

The optical glass plate according to an embodiment of the present invention preferably has a thickness of 1 mm or less.

The optical glass plate according to an embodiment of the present invention preferably has a long diameter of a major surface of 50 mm or longer.

The optical glass plate according to an embodiment of the present invention preferably has a liquidus viscosity of 10^{0.5} dPa•s or greater.

The optical glass plate according to an embodiment of the present invention preferably has a thermal expansion coefficient of 95 × 10⁻⁷/°C or lower at 30 to 300°C. Here, the thermal expansion coefficient refers to an average linear thermal expansion coefficient measured by a dilatometer.

The optical glass plate according to an embodiment of the present invention preferably has a density of 5.5 g/cm³ or less.

A light guide plate according to an embodiment of the present invention is characterized by including the optical glass plate described above.

The light guide plate according to an embodiment of the present invention is preferably used in a wearable image display device selected from eyeglasses with a projector, an eyeglasses-type or goggle-type display, a virtual reality (VR) or augmented reality (AR) display device, and a virtual image display device.

A wearable image display device according to an embodiment of the present invention is characterized by including the light guide plate described above.

### Advantageous Effects of Invention

With an embodiment of the present invention, an optical glass plate having a high refractive index and excellent visible light transmittance can be provided.

### Description of Embodiments

An optical glass according to an embodiment of the present invention has a minimum value of a refractive index (nd) of 1.90, preferably 1.91, 1.92, 1.93, 1.94, 1.95, 1.96, 1.97, 1.98, and particularly preferably 1.99. In addition, the optical glass has a maximum value of a refractive index (nd) of 2.30, preferably 2.20, 2.10, 2.08, 2.06, 2.05, 2.04, 2.03, 2.02, and particularly preferably 2.01. With a refractive index being too low, the optical glass when used as a light guide plate of a wearable image display device, such as eyeglasses with a projector, an eyeglasses-type or goggle-type display, a virtual reality (VR) or augmented reality (AR) display device, and a virtual image display device, would tend to result in a narrower viewing angle. On the other hand, with the refractive index being too high, defects, such as devitrification or a stria, would be likely to increase in the glass.

The optical glass according to an embodiment of the present invention has an internal transmittance τ₄₅₀ of, at a wavelength of 450 nm and for a thickness of 10 mm, 75% or greater, preferably 80% or greater, 82% or greater, 83% or greater, 84% or greater, 85% or greater, 86% or greater, 87% or greater, 88% or greater, 89% or greater, 90% or greater, 91% or greater, 92% or greater, and particularly preferably 93% or greater. Increasing the internal transmittance τ₄₅₀ at a wavelength of 450 nm facilitates obtaining excellent light transmittance in the visible range. As a result, this facilitates increasing the brightness of an image in the wearable image display device described above, the image being viewed by the user.

For example, increasing the internal transmittance τ₄₅₀ increases the internal transmittance τ₅₂₀ at a wavelength of 520 nm for a thickness of 10 mm, and this facilitates increasing the brightness of an image in the wearable image display device described above, the image being viewed by the user. Specifically, this enables the internal transmittance τ₅₂₀ to be 85% or greater, 87% or greater, 89% or greater, 90% or greater, 91% or greater, 92% or greater, 93% or greater, 94% or greater, 95% or greater, 96% or greater, 97% or greater, and particularly 98% or greater.

As described later, for example, adjusting valences of Ti and Nb contained in the glass can further increase the internal transmittances at the predetermined wavelengths. Specifically, increasing the valences of Ti and Nb (i.e., shifting the states of Ti and Nb toward the more oxidated states) can further increases the internal transmittances.

Hereinafter, components of an optical glass plate according to an embodiment of the present invention will be exemplified, and reasons for their preferred content ranges will be described. In the description of the content range of each component, indication in % refers to mass% unless otherwise indicated.

The optical glass plate according to an embodiment of the present invention contains as a glass composition at least one selected from Nb₂O₅, La₂O₃, and Gd₂O₃. These components are components that increase the refractive index, and thus containing at least one of these components as an essential component can achieve the desired high refractive index properties.

Nb₂O₅ is a component that significantly increases the refractive index. When Nb₂O₅ is contained, the content is preferably from 1 to 30%, from 1.7 to 25%, from 2.5 to 22%, from 3.3 to 18%, from 4.4 to 14%, from 5.3 to 10%, and particularly preferably from 6.1 to 9%. With a content of Nb₂O₅ being too low, the above effect would be hard to obtain. On the other hand, with a content of Nb₂O₅ being too high, the liquidus temperature would increase rapidly, and the liquidus viscosity would decrease, tending to deteriorate mass productivity. Furthermore, Nb, which serves as a color center, would increase, and thus this would be likely to reduce the internal transmittances.

In a spectrum obtained from X-ray photoelectron spectroscopy (XPS) on a glass cut surface, the optical glass according to an embodiment of the present invention has a ratio of peak heights of Nb²⁺ and Nb⁵⁺, that is Nb²⁺/Nb⁵⁺, of preferably 0.25 or less, 0.2 or less, 0.15 or less, 0.12 or less, 0.1 or less, 0.09 or less, 0.08 or less, 0.07 or less, 0.06 or less, 0.05 or less, 0.04 or less, 0.03 or less, and particularly preferably 0.02 or less. With the ratio Nb²⁺/Nb⁵⁺ being too high, absorption in the visible range would extremely increase, and this would tend to reduce the internal transmittances. In the XPS spectrum, the peak of Nb²⁺ is present at an energy of 202.1 eV, and the peak of Nb⁵⁺ at 207.5 eV.

La₂O₃ is a component that significantly increases the refractive index. When La₂O₃ is contained, its content is preferably from 10 to 60%, from 20 to 55%, from 35 to 55%, from 35 to 53%, from 38 to 53%, from 40 to 52%, from 42 to 52%, from 42 to 51%, and particularly preferably from 45 to 50.5%. With the content of La₂O₃ being too low, the above effect would be hard to obtain. On the other hand, with the content of La₂O₃ being too high, the liquidus temperature would increase rapidly, and the liquidus viscosity would decrease, tending to deteriorate mass productivity.

Gd₂O₃ is a component that increases the refractive index and improves stability of vitrification. When Gd₂O₃ is contained, its content is preferably from 0 to 20%, from greater than 0 to 18%, from 1 to 17%, from 2 to 16%, from 3 to 15%, from 4 to 13%, from 4 to 12%, from 5 to 11%, from 5 to 10%, and particularly preferably from 6 to 9%. With the content of Gd₂O₃ being too high, the melting temperature would extremely increase, Nb and Ti would be susceptible to reduction, and thus this would be likely to reduce the internal transmittances.

The optical glass according to an embodiment of the present invention may contain a component below in addition to the components described above.

SiO₂ is a glass skeletal component and a component that improves stability of vitrification and chemical durability. The content of SiO₂ is preferably from 1 to 20%, from 1.2 to 18%, from 1.5 to 18%, from 1.8 to 18%, from 2 to 15%, from 2.5 to 15%, from 2.5 to 13%, from 2.8 to 13%, from 3 to 12%, from 3 to 11%, from 3.5 to 10%, from 3.5 to 9%, and particularly preferably from 4 to 8%. With the content of SiO₂ being too low, the viscosity of the glass would decrease rapidly, the liquidus viscosity would decrease, and devitrification would be likely to occur during molding, thus tending to deteriorate mass productivity. On the other hand, with the content of SiO₂ being too high, the melting temperature would be extremely high. As a result, Nb and Ti would be susceptible to reduction, and thus this would be likely to reduce the internal transmittances. In addition, the refractive index would tend to decrease.

B₂O₃ is also a glass skeletal component like SiO₂, but unlike SiO₂, B₂O₃ does not increase the melting temperature of the glass but rather has an effect of lowering the melting temperature. In addition, B₂O₃ is a component that contributes to stability of vitrification. The content of B₂O₃ is preferably from 1 to 25%, from 2 to 22%, from 3 to 22%, from 3 to 20%, from 4 to 18%, from 5 to 16%, from 5 to 15%, from 5 to 13%, from 6 to 13%, from 7 to 13%, from 7.5 to 12%, from 8 to 11.5%, and particularly preferably from 8.3 to 9.5%. With the content of B₂O₃ being too low, the melting temperature would extremely increase, Nb and Ti would be susceptible to reduction, and thus this would tend to reduce the internal transmittances. On the other hand, with the content of B₂O₃ being too high, the refractive index would tend to decrease, and chemical durability would tend to decrease as well.

To achieve excellent light transmittance properties as well as to increase stability of vitrification and to improve mass productivity, the content ratio of B³⁺ and Si⁴⁺ (cation ratio = B³⁺/Si⁴⁺) in the glass composition is preferably adjusted appropriately. Specifically, B³⁺/Si⁴⁺ is preferably from 0.5 to 5, from 0.9 to 4.5, from 1.2 to 4, from 1.5 to 4, from 1.5 to 3.7, from 1.7 to 3.5, and particularly preferably from 1.8 to 3.4. With the content ratio B³⁺/Si⁴⁺ being too low, the melting temperature would extremely increase, Nb and Ti would be susceptible to reduction, and thus this would tend to reduce the internal transmittances. On the other hand, with the content ratio B³⁺/Si⁴⁺ being too high, the chemical durability of the glass would be likely to decrease. In addition, the viscosity of the glass would decrease rapidly, the liquidus viscosity would decrease, and this would be likely to deteriorate mass productivity.

In addition, Si⁴⁺ + B³⁺ (a combined amount of Si⁴⁺ and B³⁺) is preferably from 20 to 50%, from 30 to 50%, from 31 to 45%, from 32 to 45%, from 33 to 45%, from 34 to 45%, and particularly preferably from 35 to 42%. With the combined amount of Si⁴⁺ + B³⁺ being too low, vitrification would become difficult. On the other hand, with the combined amount of Si⁴⁺ + B³⁺ being too high, the refractive index would be likely to decrease.

TiO₂ is a component that increases the refractive index. In addition, TiO₂ has an effect of improving chemical durability. The content of TiO₂ is preferably from 1 to 30%, from 1.7 to 25%, from 2.5 to 23%, from 3.3 to 21%, from 8 to 20%, from 10 to 18%, and particularly preferably from 12 to 16%. With the content of TiO₂ being too low, the above effects would be hard to obtain. On the other hand, with the content of TiO₂ being too high, the liquidus temperature would increase rapidly, and the liquidus viscosity would decrease, tending to deteriorate mass productivity. Furthermore, Ti, which serves as a color center, would increase, and thus this would be likely to reduce the internal transmittances.

In a spectrum obtained from X-ray photoelectron spectroscopy (XPS) of a glass cut surface, the optical glass according to an embodiment of the present invention has a ratio of peak heights of Ti²⁺ and Ti⁴⁺, that is Ti²⁺/Ti⁴⁺, of preferably 0.3 or less, 0.25 or less, 0.21 or less, 0.15 or less, 0.12 or less, 0.1 or less, 0.09 or less, 0.08 or less, 0.07 or less, 0.06 or less, 0.05 or less, 0.04 or less, 0.03 or less, and particularly preferably 0.02 or less. With the peak height ratio Ti²⁺/Ti⁴⁺ being too high, absorption in the visible range would extremely increase, and this would tend to reduce the internal transmittances. In the XPS spectrum, the peak of Ti²⁺ is present at an energy of 455.1 eV, and the peak of Ti⁴⁺ at 459.0 eV.

ZrO₂ is a component that increases the refractive index and chemical durability. However, ZrO₂ acts as a crystal nucleus and thus would promote devitrification if contained in high amount. Thus, the content of ZrO₂ is preferably from 0 to 15%, from greater than 0 to 10%, from 1 to 9%, from 3 to 8%, from 4 to 7.5%, and particularly preferably from 5 to 7%.

Y₂O₃ is a component that significantly increases the refractive index. However, with the content of Y₂O₃ being too high, devitrification or a stria would be likely to occur. Thus, the content of Y₂O₃ is preferably from 0 to 5%, from greater than 0 to 5%, from 0.1 to 4%, from 0.3 to 2%, from 0.4 to 1%, and particularly preferably from 0.5 to 0.8%.

Yb₂O₃ is a component that significantly increases the refractive index. However, with the content of Yb₂O₃ being too high, devitrification or a stria would be likely to occur. Thus, the content of Yb₂O₃ is preferably from 0 to 5%, from greater than 0 to 5%, from 0.1 to 4%, from 0.3 to 2%, from 0.4 to 1%, and particularly preferably from 0.5 to 0.8%.

The content of Y₂O₃ + Yb₂O₃ (combined amount of Y₂O₃ and Yb₂O₃) is preferably from 0 to 5%. With the content of Y₂O₃ + Yb₂O₃ being too high, the liquidus temperature would increase rapidly, the liquidus viscosity would decrease, and devitrification or a stria would be likely to occur. The upper limit of the content of Y₂O₃ + Yb₂O₃ is preferably 4%, 3.5%, 3%, 2.5%, 2%, 1.5%, 1%, and particularly preferably 0.9%. On the other hand, the lower limit of the content of Y₂O₃ + Yb₂O₃ is preferably 0.1%, 0.2%, 0.3%, 0.4%, 0.5%, and particularly preferably 0.6%. This facilitates obtaining the desired high refractive index properties.

To prevent the reduction of Nb and Ti, an oxidizing agent of various types is preferably added to the optical glass according to an embodiment of the present invention during melting. Examples of such an oxidizing agent include calcium nitrate, strontium nitrate, barium nitrate, sodium nitrate, and potassium nitrate. Among these, calcium nitrate and strontium nitrate are particularly preferred. In addition, a combined amount of the oxidizing agents to be added is preferably from 0 to 5%, from 0 to 3%, and particularly preferably from 0.01 to 1% in a glass batch.

Using the oxidizing agent described above allows a component, such as CaO, SrO, BaO, Na₂O, or K₂O, to be contained in the glass composition. The effects and content ranges of these components will be described below.

CaO is a component that contributes to stability of vitrification. However, with the content of CaO being too high, the liquidus temperature would tend to increase, and the refractive index would tend to decrease. Thus, the content of CaO is preferably from 0 to 5%, from 0 to 2%, and particularly preferably from 0.01 to 0.5%.

SrO is a component that contributes to stability of vitrification. However, with the content of SrO being too high, the refractive index would tend to decrease. Thus, the content of SrO is preferably from 0 to 5%, from 0 to 2%, and particularly preferably from 0.01 to 0.5%.

BaO is a component that contributes to stability of vitrification as well as increases the refractive index. However, containing BaO would increase the density of the glass and tend to increase the weight of an optical element including the optical glass according to an embodiment of the present invention. Thus, this is not preferred particularly for applications, such as wearable image display devices. Accordingly, the content of BaO is preferably 1% or less, 0.5% or less, 0.2% or less, and BaO is particularly preferably not contained.

To achieve the desired refractive index and internal transmittances and to increase stability of vitrification, the combined amount of CaO, SrO, and BaO is preferably from 0 to 5%, from 0 to 2%, from 0 to 1%, from 0 to 0.9%, from 0 to 0.8%, from 0 to 0.7%, from 0 to 0.6%, from 0 to 0.5%, and particularly preferably from 0.01 to 0.5%.

Na₂O and K₂O are components that lower the softening point, but with too high of their content, devitrification or a stria would be likely to occur. Thus, the contents of these components are preferably each from 0 to 3%, each from 0 to 1%, and these components are particularly preferably not contained. In addition, Li₂O, another alkali metal, is also a component that lowers the softening point, but with too high of its content, devitrification or a stria would be likely to occur. Thus, the content of Li₂O is preferably from 0 to 3%, from 0 to 1%, and Li₂O is particularly preferably not contained.

To prevent the reduction of Nb and Ti, a reducing agent, such as carbon or metal, is preferably not contained during melting.

ZnO is a component that promotes devitrification in the composition system according to an embodiment of the present invention, and thus its content is preferably low. Specifically, the content of ZnO is preferably 1% or less, 0.5% or less, even 0.1% or less, and ZnO is particularly preferably not contained.

WO₃ is a component that increases the refractive index but tends to reduce light transmittance in the visible region. Thus, the content is preferably 1% or less, 0.6% or less, 0.5% or less, 0.3% or less, and WO₃ is particularly preferably not contained.

An arsenic component (such as As₂O₃), a fluorine component (such as F₂), or a lead component (such as PbO) has a large environmental load and thus is preferably not substantially contained.

For the optical glass according to the present invention, a fining agent, such as CaCl₂ or Sb₂O₃, may be used to improve clarity. A combined amount of these fining agents is preferably 8% or less, 5% or less, 2% or less, and particularly preferably 1% or less in a glass batch. In such a case, the content of the fining agent contained in the glass component, specifically each content of Cl or Sb₂O₃, is preferably 5% or less, 3% or less, and particularly preferably 0.5% or less.

The optical glass according to an embodiment of the present invention may contain as an impurity, for example, H₂, CO₂, CO, H₂O, He, Ne, Ar, or N₂ up to 0.1% each. Furthermore, the optical glass may contain Pt, Rh, or Au as an impurity. However, with the content of Pt, Rh, or Au being too high, each of these elements would act as a color center in the glass, and this would be likely to reduce the internal transmittances. Thus, each content of Pt, Rh, or Au is preferably 500 ppm or less, 300 ppm or less, and particularly preferably 100 ppm or less.

The optical glass according to an embodiment of the present invention has a liquidus viscosity of preferably 10^{0.5} dPa•s or greater, 10^{0.6} dPa•s or greater, 10^{0.7} dPa•s or greater, and particularly preferably 10^{0.8} dPa•s or greater. With the liquidus viscosity being too low, the glass would need to be molded with low viscosity, and thus a defect, such as a stria, would be likely to occur in the glass particularly when the molding size is large. The upper limit of the liquidus viscosity is not particularly limited but is realistically 10^{1.5} dPa•s or less and particularly 10^{1.2} dPa•s or less.

The optical glass according to an embodiment of the present invention has a liquidus temperature of preferably 1350°C or lower, 1300°C or lower, 1250°C or lower, 1200°C or lower, and even 1170°C or lower. With the liquidus temperature being too high, the load on a precious metal pot and pipe would increase, and these would need to be replaced frequently, thus tending to increase the manufacturing cost. The lower limit of the liquidus temperature is not particularly limited but is realistically 1000°C or higher and even 1050°C or higher.

The liquidus viscosity and the liquidus temperature can be calculated by a method described in Examples below.

An Abbe number (vd) of the optical glass according to an embodiment of the present invention is not particularly limited but is preferably from 20 to 35, from 22 to 32, and particularly preferably from 25 to 30 in view of stability of vitrification.

The optical glass according to an embodiment of the present invention has a density of preferably 5.5 g/cm³ or less, 5.3 g/cm³ or less, and particularly preferably 5.1 g/cm³ or less. With the density being too high, a weight of the wearable device formed using the optical glass according to an embodiment of the present invention would increase, and this would cause a user to experience discomfort when the device is worn by the user. The lower limit of the density is not particularly limited, but with the density being too low, other properties, such as optical properties, would decrease, and thus the density is preferably 4.0 g/cm³ or greater and particularly preferably 4.5 g/cm³ or greater.

The optical glass according to an embodiment of the present invention has a thermal expansion coefficient at a temperature from 30 to 300°C of preferably 95 × 10⁻⁷/°C or lower, 91 × 10⁻⁷/°C or lower, and particularly preferably 88 × 10⁻⁷/°C or lower. With the thermal expansion coefficient being too large, the glass would be susceptible to crack due to thermal shock. The lower limit of the thermal expansion coefficient is not particularly limited, but with the thermal expansion coefficient being too low, other properties, such as optical properties, would decrease, and thus the thermal expansion coefficient is preferably 75 × 10⁻⁷/°C or greater and particularly preferably 80 × 10⁻⁷/°C or greater.

The thickness of the optical glass plate according to an embodiment of the present invention is preferably 1 mm or less, 0.8 mm or less, 0.7 mm or less, 0.6 mm or less, 0.5 mm or less, 0.4 mm or less, and particularly preferably 0.3 mm or less. With the thickness of the optical glass plate being too large, the weight of the wearable image display device formed using the optical glass plate would increase, and this would cause a user to experience discomfort when the device is worn by the user. The lower limit of the thickness is not particularly limited but is 0.01 mm or greater, 0.03 mm or greater, and particularly 0.05 mm or greater in view of mechanical strength.

The shape of the optical glass plate according to an embodiment of the present invention is, for example, in a plate form having a planar shape of, for example, a circle or an ellipse, or a polygon such as a rectangle. In this case, a long diameter (or a diameter in the case of a circle) of the optical glass plate is preferably 50 mm or longer, 80 mm or longer, 100 mm or longer, 120 mm or longer, 150 mm or longer, 160 mm or longer, 170 mm or longer, 180 mm or longer, 190 mm or longer, and particularly preferably 200 mm or longer. With the long diameter of the optical glass plate being too small, using the optical glass pate in applications, such as wearable image display device, would be difficult and tend to deteriorate mass productivity. The upper limit of the long diameter of the optical glass plate is not particularly limited but is realistically 1000 mm or smaller.

The optical glass plate according to an embodiment of the present invention is suitable as a light guide plate, which is a constituting member of a wearable image display device selected from eyeglasses with a projector, an eyeglasses-type or goggle-type display, a virtual reality (VR) or augmented reality (AR) display device, and a virtual image display device. The light guide plate is used, for example, in an eyeglass lens portion of a wearable image display device and plays a role of guiding light emitted from an image display element included in the wearable image display device and emitting light toward the pupil of a user. The surface of the light guide plate is preferably provided with a diffraction grating for diffracting light emitted from the image display element into the light guide plate.

### Examples

Hereinafter, the present invention will now be described in detail using examples, but the present invention is not limited to these examples.

Tables 1 to 4 list Examples (Nos. 1 to 27) of the present invention.

**[Table 1]**

| | | Unit | 1 | 2 | 3 | 4 | 5 | 6 | 7 |
|---|---|---|---|---|---|---|---|---|---|
| Glass composition | SiO₂ | mass% | 5.2 | 6.6 | 5.2 | 5.0 | 4.9 | 6.6 | 10.0 |
| | B₂O₃ | | 10.4 | 8.8 | 10.1 | 9.8 | 9.7 | 10.8 | 4.7 |
| | TiO₂ | | 14.6 | 14.6 | 14.5 | 12.4 | 13.9 | 15.1 | 14.9 |
| | Nb₂O₅ | | 8 | 7.4 | 8.1 | 12.9 | 7.7 | 2.9 | 7.9 |
| | ZrO₂ | | 5.9 | 5.9 | 5.9 | 5.7 | 3.3 | 6.1 | 5.9 |
| | La₂O₃ | | 48.1 | 48.2 | 47.9 | 46.2 | 45.7 | 49.9 | 48.3 |
| | Gd₂O₃ | | 7.7 | 7.7 | 7.7 | 7.4 | 14.2 | 8.0 | 7.7 |
| | Y₂O₃ | | 0.1 | 0.8 | 0.6 | 0.6 | 0.6 | 0.6 | 0.6 |
| | Sb₂O₃ | | | | | | | | |
| | SrO | | | | | | | | |
| | CaO | | | | | | | | |
| | Cl | | | | | | | | |
| Ti²⁺/Ti⁴⁺ | | - | <0.02 | <0.02 | <0.02 | <0.02 | <0.03 | <0.02 | Not measured |
| Nb²⁺/Nb⁵⁺ | | - | <0.02 | <0.02 | <0.02 | <0.02 | <0.03 | <0.02 | Not Measured |
| B³⁺/Si⁴⁺ | | - | 3.5 | 2.3 | 3.4 | 3.4 | 3.4 | 2.8 | 0.8 |
| B³⁺+Si⁴⁺ | | Cation % | 38.0 | 36.5 | 37.3 | 36.7 | 36.6 | 40.5 | 32.1 |
| Refractive index (nd) | | - | 1.98 | 1.99 | 1.99 | 2.00 | 1.99 | 1.96 | 1.98 |
| Abbe number (vd) | | - | 17.2 | 28.8 | 28.5 | 29.8 | 29.1 | 29.9 | 19.2 |
| τ₄₅₀ | | % | 89 | 94 | 89 | 91 | 90 | 87 | 77 |
| τ₅₂₀ | | % | 95 | 98 | 95 | 96 | 97 | 91 | 86 |
| Liquidus temperature | | °C | 1090 | 1130 | 1115 | 1205 | 1160 | 1120 | 1225 |
| Liquidus viscosity | | dPa•s | 10^{1.0} | 10^{1.0} | 10^{0.9} | 10^{0.8} | 10^{0.7} | 10^{1.0} | 10^{0.7} |
| Density | | g/cm³ | 4.95 | 5.00 | 4.98 | 5.00 | 5.12 | 4.92 | Not Measured |
| Thermal expansion coefficient | | ×10⁻⁷/°C | 83 | 83 | 85 | 82 | 82 | 82 | Not measured |

**[Table 2]**

| | | Unit | 8 | 9 | 10 | 11 | 12 | 13 | 14 |
|---|---|---|---|---|---|---|---|---|---|
| Glass composition | SiO₂ | mass% | 6.6 | 6.6 | 6.6 | 6.6 | 6.4 | 6.6 | 7.4 |
| | B₂O₃ | | 8.8 | 8.8 | 8.7 | 8.6 | 9.0 | 8.8 | 10.4 |
| | TiO₂ | | 14.6 | 14.6 | 14.5 | 15.6 | 14.0 | 14.7 | 15.0 |
| | Nb₂O₅ | | 7.4 | 7.4 | 7.4 | 7.2 | 7.8 | 7.5 | 6.6 |
| | ZrO₂ | | 5.9 | 5.9 | 5.9 | 5.5 | 6.1 | 5.9 | 2.7 |
| | La₂O₃ | | 48.0 | 48.0 | 48.2 | 48.0 | 48.1 | 47.6 | 49.6 |
| | Gd₂O₃ | | 7.8 | 7.7 | 7.6 | 7.3 | 7.7 | 7.8 | 8.0 |
| | Y₂O₃ | | 0.8 | 0.8 | 0.8 | 0.8 | 0.8 | 0.8 | |
| | Sb₂O₃ | | | 0.1 | | | | | |
| | SrO | | 0.1 | 0.1 | 0.2 | 0.4 | 0.1 | 0.1 | 0.3 |
| | CaO | | | | | | | 0.1 | |
| | Cl | | | | | | | 0.1 | |
| Ti²⁺/Ti⁴⁺ | | - | <0.02 | <0.02 | <0.02 | <0.02 | <0.02 | <0.02 | <0.02 |
| Nb²⁺/Nb⁵⁺ | | - | <0.02 | <0.02 | <0.02 | <0.02 | <0.02 | <0.02 | <0.02 |
| B³⁺/Si⁴⁺ | | - | 2.3 | 2.3 | 2.3 | 2.2 | 2.4 | 2.3 | 2.4 |
| B³⁺+Si⁴⁺ | | Cation % | 36.5 | 36.5 | 36.2 | 35.8 | 36.7 | 36.3 | 40.9 |
| Refractive index (nd) | | - | 1.99 | 1.99 | 1.99 | 1.99 | 1.99 | 1.99 | 1.96 |
| Abbe number (vd) | | - | 28.8 | 28.7 | 28.7 | 28.7 | 28.6 | 28.6 | 29.4 |
| τ₄₅₀ | | % | 98 | 96 | 95 | 89 | 96 | 91 | 91 |
| τ₅₂₀ | | % | 99 | 97 | 98 | 95 | 99 | 97 | 98 |
| Liquidus temperature | | °C | 1135 | 1135 | 1135 | 1135 | 1135 | 1135 | 1115 |
| Liquidus viscosity | | dPa•s | 10^{1.0} | 10^{1.0} | 10^{1.0} | 10^{1.0} | 10^{1.0} | 10^{1.0} | 10^{0.9} |
| Density | | g/cm³ | 5.00 | 5.00 | 5.00 | 5.00 | 5.00 | 5.00 | Not Measured |
| Thermal expansion coefficient | | ×10⁻⁷/°C | 83 | 83 | 83 | 83 | 83 | 83 | Not measured |

**[Table 3]**

| | | Unit | 15 | 16 | 17 | 18 | 19 | 20 | 21 |
|---|---|---|---|---|---|---|---|---|---|
| Glass composition | SiO₂ | mass% | 5.5 | 6.5 | 5 | 5 | 5 | 4 | 10 |
| | B₂O₃ | | 10.5 | 8.8 | 10 | 10 | 10 | 11.5 | 4.5 |
| | TiO₂ | | 14.5 | 14.5 | 14.5 | 12.5 | 14 | 14.5 | 15 |
| | Nb₂O₅ | | 8.0 | 7.5 | 8 | 13 | 7.5 | 8 | 8 |
| | ZrO₂ | | 6 | 6 | 6 | 5.5 | 3.5 | 6 | 6 |
| | La₂O₃ | | 48 | 48 | 48 | 46 | 45.5 | 48 | 48 |
| | Gd₂O₃ | | 7.5 | 8 | 8 | 7.5 | 14 | 7.5 | 8 |
| | Y₂O₃ | | | 0.7 | 0.5 | 0.5 | 0.5 | 0.5 | 0.5 |
| | Sb₂O₃ | | | | | | | | |
| | SrO | | | | | | | | |
| | CaO | | | | | | | | |
| | Cl | | | | | | | | |
| Ti²⁺/Ti⁴⁺ | | - | <0.02 | <0.02 | <0.02 | <0.02 | <0.03 | <0.02 | Not measured |
| Nb²⁺/Nb⁵⁺ | | - | <0.02 | <0.02 | <0.02 | <0.02 | <0.03 | <0.02 | Not Measured |
| B³⁺/Si⁴⁺ | | - | 3.3 | 2.3 | 3.5 | 3.5 | 3.5 | 5.0 | 0.8 |
| B³⁺+Si⁴⁺ | | Cation % | 38.6 | 36.4 | 36.9 | 37.1 | 37.4 | 38.6 | 31.6 |
| Refractive index (nd) | | - | 1.97 | 1.99 | 1.99 | 2.00 | 1.99 | 1.95 | 1.98 |
| Abbe number (vd) | | - | 17.2 | 28.8 | 28.5 | 29.8 | 29.1 | 29.9 | 19.2 |
| τ₄₅₀ | | % | 89 | 94 | 89 | 91 | 90 | 87 | 77 |
| τ₅₂₀ | | % | 95 | 98 | 95 | 96 | 97 | 91 | 86 |
| Liquidus temperature | | °C | 1090 | 1130 | 1115 | 1205 | 1160 | 1095 | 1225 |
| Liquidus viscosity | | dPa•s | 10^{1.0} | 10^{1.0} | 10^{0.9} | 10^{0.8} | 10^{0.7} | 10^{0.9} | 10^{0.7} |
| Density | | g/cm³ | 4.95 | 5.00 | 4.98 | 5.00 | 5.12 | 4.96 | Not Measured |
| Thermal expansion coefficient | | ×10⁻⁷/°C | 83 | 83 | 85 | 82 | 82 | 82 | Not measured |

**[Table 4]**

| | | Unit | 22 | 23 | 24 | 25 | 26 | 27 |
|---|---|---|---|---|---|---|---|---|
| Glass composition | SiO₂ | mass% | 5 | 6.5 | 8 | 6.5 | 6.5 | 6.5 |
| | B₂O₃ | | 10 | 8.8 | 7.5 | 8.8 | 9 | 8.8 |
| | TiO₂ | | 14 | 14.5 | 14.5 | 14.5 | 14 | 14.5 |
| | Nb₂O₅ | | 8 | 7.5 | 8 | 7.5 | 8 | 7.5 |
| | ZrO₂ | | 3.5 | 6 | 6 | 6 | 6 | 6 |
| | La₂O₃ | | 39.5 | 47.8 | 48 | 47.6 | 47.4 | 47.7 |
| | Gd₂O₃ | | 19.5 | 8 | 7.5 | 8 | 8 | 8 |
| | Y₂O₃ | | 0.5 | 0.7 | 0.5 | 0.7 | 1 | 0.7 |
| | Sb₂O₃ | | | 0.1 | | | | |
| | SrO | | | 0.1 | | 0.4 | 0.1 | 0.1 |
| | CaO | | | | | | | 0.1 |
| | Cl | | | | | | | 0.1 |
| Ti²⁺/Ti⁴⁺ | | - | <0.02 | <0.02 | <0.02 | <0.02 | <0.02 | <0.02 |
| Nb²⁺/Nb⁵⁺ | | - | <0.02 | <0.02 | <0.02 | <0.02 | <0.02 | <0.02 |
| B³⁺/Si⁴⁺ | | - | 3.5 | 2.3 | 1.6 | 2.3 | 2.4 | 2.3 |
| B³⁺+Si⁴⁺ | | Cation % | 37.5 | 36.4 | 35.6 | 36.3 | 36.8 | 36.2 |
| Refractive index (nd) | | - | 1.95 | 1.99 | 1.96 | 1.99 | 1.99 | 1.99 |
| Abbe number (vd) | | - | 28.8 | 28.7 | 28.7 | 28.7 | 28.6 | 28.6 |
| τ₄₅₀ | | % | 95 | 92 | 95 | 89 | 96 | 91 |
| τ₅₂₀ | | % | 97 | 97 | 98 | 95 | 99 | 97 |
| Liquidus temperature | | °C | 1220 | 1135 | 1190 | 1135 | 1135 | 1135 |
| Liquidus viscosity | | dPa•s | 10^{0.7} | 10^{1.0} | 10^{1.0} | 10^{1.0} | 10^{1.0} | 10^{1.0} |
| Density | | g/cm³ | 5.18 | 5.00 | 5.00 | 5.00 | 5.00 | 5.00 |
| Thermal expansion coefficient | | ×10⁻⁷/°C | 83 | 83 | 83 | 83 | 83 | 83 |

First, glass raw materials were blended to give each composition shown in Tables 1 to 4. Here, in Nos. 8 to 10, 12, and 26, strontium nitrate was used as an oxidizing agent. For a fining agent, antimony oxide was used in Nos. 9 and 23, and calcium chloride was used in Nos. 13 and 27.

The glass was then melted at a temperature from 1200 to 1350°C using a platinum crucible. The melting time was 2 hours for all. The molten glass was poured onto a carbon plate, annealed, and then a sample suitable for each measurement was produced.

The resulting sample was cut to analyze the cut surface by XPS, and Ti²⁺/Ti⁴⁺ and Nb²⁺/Nb⁵⁺ were determined. The results are shown in Tables 1 to 4. Specifically, the resulting XPS spectrum was subjected to a 9-point smoothing process to determine peak heights of Ti²⁺ (455.1 eV) and Ti⁴⁺ (459.0 eV), and the ratio, Ti²⁺/Ti⁴⁺, was obtained. In addition, peak heights of Nb²⁺ (202.1 eV) and Nb⁵⁺ (207.5 eV) were determined, and the ratio, Nb²⁺/Nb⁵⁺, was obtained. The XPS analysis was performed using a Quantera SXM available from PHI under the conditions that the excited X-ray was Al Kα_{1,2} line (1486.6 eV), the X-ray spot diameter was 200 µm, and the photoelectron escape angle was 45°.

In addition, the resulting sample was measured for the refractive index (nd), Abbe number (vd), internal transmittances, liquidus temperature, liquidus viscosity, density, and thermal expansion coefficient as follows. The results are shown in Tables 1 to 4.

The refractive index was presented as a measured value for a d-line (587.6 nm) of a helium lamp.

The Abbe numbers were calculated from the Abbe number formula, (vd) = [(nd - 1)/(nF - nC)], using the above refractive index for a d-line, a refractive index value for an F-line (486.1 nm) of a hydrogen lamp, and a refractive index value for a C-line (656.3 nm) of the hydrogen lamp.

The internal transmittances were measured as follows. Optically polished samples each having a thickness of 10 mm ± 0.1 mm or 3 mm ± 0.1 mm were prepared, and the light transmittance (linear transmittance) including surface reflection loss was measured at 1 nm intervals using a spectrophotometer (UV-3100 available from Shimadzu Corporation). From the linear transmittances for thicknesses of 10 mm and 3 mm, an internal transmittance curve for the thickness of 10 mm was determined. From the internal transmittances at wavelengths of 450 nm and 520 nm, the measured values were obtained.

The liquidus temperature and liquidus viscosity were determined as follows.

A pulverized glass sample was filled in a refractory container and melted in an electric furnace under conditions of 1250°C for 0.5 hours. The refractory container was then placed in an indirect heating type temperature gradient furnace and allowed to stand in air atmosphere for 16 hours. The refractory container was then taken out from the temperature gradient furnace and cooled to room temperature. The glass sample after cooling was visually observed to determine the location of crystal precipitation, and the liquidus temperature (crystal precipitation temperature) was determined from the temperature distribution information in the temperature gradient furnace.

Separately, a bulk glass sample was charged in an alumina crucible and heated to melt. From the resulting glass melt, viscosities of the glass at a plurality of temperatures were determined by the platinum ball pulling-up method. The constant of the Vogel-Fulcher equation was calculated using the measured values of the glass viscosities, and a viscosity curve was created.

The viscosity (liquidus viscosity) corresponding to the liquidus temperature was determined using the liquidus temperature and the viscosity curve determined as described above.

The density was measured by the Archimedes method using a glass sample about 10 g in weight.

The thermal expansion coefficient was measured with a dilatometer in a temperature range from 30 to 300°C using a glass sample molded in about 5ϕ × 20 mm.

As shown in Tables 1 to 4, samples Nos. 1 to 27 from examples had high refractive index properties with refractive indexes from 1.95 to 2.00, excellent internal transmittances with internal transmittances τ₄₅₀ from 77 to 98% and internal transmittances τ₅₂₀ from 86 to 99%, low liquidus temperatures from 1090 to 1225°C, and high liquidus viscosities from 10^{0.7} to 10^{1.0} dPa•s, having excellent productivity.

Large glass plates having a glass composition of No. 2, 5, or 10 were then produced as follows.

First, glass raw materials were blended to give each composition of No. 2, 5, or 10. In No. 10, strontium nitrate was used as an oxidizing agent. Each composition was then melted at 1300°C using a pot-type large furnace, and the molten glass was poured from a platinum nozzle into a 500-mm square carbon mold to give a thickness of 20 mm and molded.

The resulting ingot was annealed, then the central portion of the ingot was hollowed out in a circular shape, sliced thinly in the surface direction, then both sides were lap-polished and finished to a mirror surface by further polishing. Dimensions of the produced optical glass plates are shown in Table 5.

**[Table 5]**

| | Optical glass plate 1 | Optical glass plate 2 | Optical glass plate 3 |
|---|---|---|---|
| Composition | No. 2 | No. 5 | No. 10 |
| Diameter (mm) | 300 | 320 | 400 |
| Thickness (mm) | 0.3 | 0.2 | 0.1 |

The optical glass plates 1 to 3 shown in Table 5 had desired dimensions with diameters of 300 to 400 nm and thicknesses from 0.1 to 0.3 mm, and no defects, such as devitrification or a stria, were not observed.

### Industrial Applicability

The optical glass plate according to an embodiment of the present invention is suitable as a light guide plate for use in a wearable image display device selected from: eyeglasses with a projector; an eyeglasses-type or goggle-type display; a virtual reality (VR) or augmented reality (AR) display device; and a virtual image display device.

## Claims

1. An optical glass plate containing as a glass composition at least one selected from Nb₂O₅, La₂O₃, and Gd₂O₃, the optical glass plate having: a refractive index (nd) from 1.90 to 2.30; and an internal transmittance τ₄₅₀ of 75% or greater for a thickness of 10 mm at a wavelength of 450 nm.

2. The optical glass plate according to claim 1, having an internal transmittance τ₅₂₀ of 85% or greater for a thickness of 10 mm at a wavelength of 520 nm.

3. The optical glass plate according to claim 1 or 2, containing TiO₂ as a glass composition, wherein a ratio of peak heights of Ti²⁺ and Ti⁴⁺, that is Ti²⁺/Ti⁴⁺, is 0.3 or less, in a spectrum obtained by X-ray photoelectron spectroscopy (XPS) on a glass cut surface.

4. The optical glass plate according to any one of claims 1 to 3, containing Nb₂O₅ as a glass composition, wherein a ratio of peak heights of Nb²⁺ and Nb⁵⁺, that is Nb²⁺/Nb⁵⁺, is 0.25 or less, in a spectrum obtained by X-ray photoelectron spectroscopy (XPS) on a glass cut surface.

5. The optical glass plate according to any one of claims 1 to 4, containing, as glass compositions, from 1 to 20% of SiO₂, from 1 to 25% of B₂O₃, from 1 to 30% of TiO₂, and from 1 to 30% of Nb₂O₅ in terms of an oxide in mass%.

6. The optical glass plate according to claim 5, further containing from 10 to 60% of La₂O₃, from 0 to 20% of Gd₂O₃, from 0 to 15% of ZrO₂, and from 0 to 5% of Y₂O₃ in terms of an oxide in mass%.

7. The optical glass plate according to claim 5 or 6, further containing from 0 to 5% of CaO or from 0 to 5% of SrO in terms of an oxide in mass%.

8. The optical glass plate according to any one of claims 1 to 7, wherein a content ratio of B³⁺ and Si⁴⁺, that is B³⁺/Si⁴⁺, in a glass composition is from 0.5 to 5.

9. The optical glass plate according to any one of claims 1 to 8, containing as a glass composition substantially no arsenic component, no fluorine component, and no lead component.

10. The optical glass plate according to any one of claims 1 to 9, having an Abbe number (vd) from 20 to 35.

11. The optical glass plate according to any one of claims 1 to 10, having a thickness of 1 mm or less.

12. The optical glass plate according to any one of claims 1 to 11, having a long diameter of a main surface of 50 mm or longer.

13. The optical glass plate according to any one of claims 1 to 12, having a liquidus viscosity of 10^{0.5} dPa•s or greater.

14. The optical glass plate according to any one of claims 1 to 13, having a thermal expansion coefficient of 95 × 10⁻⁷/°C or lower at 30 to 300°C.

15. The optical glass plate according to any one of claims 1 to 14, having a density of 5.5 g/cm³ or less.

16. A light guide plate comprising the optical glass plate described in any one of claims 1 to 15.

17. The light guide plate according to claim 16, which is for use in a wearable image display device selected from: eyeglasses with a projector; an eyeglasses-type or goggle-type display; a virtual reality (VR) or augmented reality (AR) display device; and a virtual image display device.

18. A wearable image display device comprising the light guide plate described in claim 16 or 17.
